(19) Europäisches Patentamt
European Patent Office
Office européen des brevets

(11) Veröffentlichungsnummer: **0 368 031 B1**

(12) # EUROPÄISCHE PATENTSCHRIFT

(45) Veröffentlichungstag der Patentschrift: **01.09.93**

(51) Int. Cl.$^5$: **C08G 18/70**, C08G 18/58, C08G 18/00, C08G 18/08

(21) Anmeldenummer: **89119133.0**

(22) Anmeldetag: **14.10.89**

Die Akte enthält technische Angaben, die nach dem Eingang der Anmeldung eingereicht wurden und die nicht in dieser Patentschrift enthalten sind.

(54) **Reaktivsysteme und ein Verfahren zur Herstellung von Polyurethankunststoffen.**

(30) Priorität: **27.10.88 DE 3836598**

(43) Veröffentlichungstag der Anmeldung:
**16.05.90 Patentblatt 90/20**

(45) Bekanntmachung des Hinweises auf die Patenterteilung:
**01.09.93 Patentblatt 93/35**

(84) Benannte Vertragsstaaten:
**AT BE CH DE ES FR GB IT LI NL SE**

(56) Entgegenhaltungen:
**EP-A- 0 272 563**
**DE-A- 3 600 764**
**US-A- 4 614 786**

(73) Patentinhaber: **BAYER AG**

**D-51368 Leverkusen(DE)**

(72) Erfinder: **Müller, Hanns-Peter, Dr.**
**Weizenfeld 36**
**D-5060 Bergisch-Gladbach 2(DE)**
Erfinder: **Ganster, Otto, Dr.**
**Droste-Hülshoffstrasse 5**
**D-5068 Odenthal-Hahnenberg(DE)**
Erfinder: **Luckas, Bruno**
**Petersbergstrasse 4**
**D-5090 Leverkusen 1(DE)**

**EP 0 368 031 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Reaktivsysteme, bestehend aus einer speziellen Polyisocyanatkomponente und einer Reaktivkomponente für diese Polyisocyanatkomponente, sowie Hilfs- und Zusatzstoffen, und ein Verfahren zur Herstellung von Isocyanuratgruppen aufweisenden Polyurethankunststoffen unter Verwendung dieser Reaktivsysteme.

Die Herstellung von Isocyanuratgruppen aufweisenden Kunststoffen ist seit Jahren bekannt und wird in vielfältiger Form technisch genutzt. So beschreibt beispielsweise die DE-OS 25 34 247 ein Verfahren zur Herstellung von Formteilen auf Basis von Isocyanuratmodifizierten Polyurethanen unter Verwendung von stark basischen Verbindungen wie beispielsweise Alkaliacetaten oder Alkaliphenolaten als Trimerisierungskatalysatoren. Mit diesen Katalysatoren sind Verfestigungszeiten von 0,75 bis 2 Minuten realisierbar. Für längere Verfestigungszeiten, d.h. für oftmals erforderliche längere Topfzeiten der Reaktionsansatze ist dieses Verfahren nicht brauchbar, weil die basischen Katalysatoren dann in sehr geringen Mengen eingesetzt werden müßten, was zur Folge hat, daß saure Verunreinigungen wie sie in den Rohstoffen oder Zusatzmitteln vorliegen können durch Neutralisation des Katalysators den zeitlichen Ablauf der Verfestigungsreaktion völlig unkontrollierbar beeinflussen. Eine reproduzierbare Verarbeitung der Rohstoffe ist dann nicht mehr möglich.

Die beispielsweise in DE-OS 1 809 391 als Trimerisierungskatalysatoren empfohlenen Mannichbasen erlauben zwar längere Topfzeiten, sind jedoch mit dem Nachteil behaftet, daß die Endaushärtung sehr langsam und oftmals unvollständig abläuft, was sich in schlechteren Wärmeeigenschaften der resultierenden Kunststoffen niederschlägt.

In EP 272 563 wird ein Verfahren zur zweistufigen Herstellung von Formkörpern durch Umsetzung von mindestens einem organischen Polyisocyanat und einem organischen Epoxid beschrieben, wobei das Reaktionsgemisch in Gegenwart eines tertiären Amins als Katalysator zu einem Zwischenprodukt umgesetzt wird und die Reaktion bei einer Umsetzung von maximal 65% der im Ausgangsgemisch vorliegenden Isocyanatgruppen durch Zugabe einer alkylierend wirkenden Verbindung abgebrochen wird, das so erhaltene Zwischenprodukt mit einem latenten, durch Wärme aktivierbaren Katalysator versetzt und in einer zweiten Stufe unter Formgebung und weiterer Wärmeeinwirkung in den endgültigen, vernetzten Zustand übergeführt wird.

Aus US 4 614 786 ist ein Verfahren zur Herstellung von Polyurethanen bekannt, bei dem ein Prepolymer, welches aus einem Polyisocyanat und einem Polyepoxid in Abwesenheit von jeglichen Katalysatoren hergestellt wurde, mit einem Polyol umgesetzt wird.

Es war die der vorliegenden Erfindung zugrundeliegende Aufgabe neue Reaktivsysteme zur Verfügung zu stellen, die zu hochwertigen, Isocyanuratgruppen aufweisenden Polyurethanen ausreagieren, ohne mit den Nachteilen der Systeme des Standes der Technik behaftet zu sein. Dies bedeutet insbesondere, daß die Reaktivsysteme bei Raumtemperatur oder mäßig erhöhter Temperatur eine für die Bedürfnisse der Praxis ausreichend lange Topfzeit bei gleichzeitig kurzen Aushärtzeiten bei erhöhten Temperaturen aufweisen sollten.

Diese Aufgabe konnte durch die Bereitstellung der nachstehend näher beschriebenen erfindungsgemäßen Reaktivsysteme bzw. des erfindungsgemäßen Verfahrens zur Herstellung von Isocyanurat-modifizierten Polyurethankunststoffen gelöst werden.

Gegenstand der Erfindung sind Reaktivsysteme bestehend aus

a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Warmebehandlung der Epoxidkomponente (ii) bei 30 bis 150 °C in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,15 Mol an Epoxidgruppen vorliegen,

b) einer NCO-reaktiven Komponente, bestehend aus mindestens einer organischen Verbindung mit mindestens 2 gegenüber Isocyanatgruppen im Sinne einer Additionsreaktion reaktionsfähigen Gruppen, mit der Maßgabe, daß mindestens 10 Gew.-% der Komponente b) aus Verbindungen besteht, die ein über 2000 liegendes, aus der Funktionalität und dem Gehalt an NCO-reaktiven Gruppen berechenbares Molekulargewicht aufweisen, wobei die Menge der Komponente b) so gewählt wird, daß auf jede Isocyanatgruppe der Komponente a) 0,1 bis 0,9 gegenüber Isocyanatgruppen reaktionsfähige Gruppen der Komponente b) entfallen,

c) tertiären Aminen, die in einer solchen Menge vorliegen, daß die Gesamtmischung unter Einbeziehung der gegebenenfalls in der Komponente b) vorliegenden tertiären Aminstickstoffatome pro 100 g mindestens 0,005 Mol tertiären Aminstickstoff enthält

und gegebenenfalls

d) weiteren Hilfs- und Zusatzstoffen.

Gegenstand der Erfindung ist auch ein Verfahren zur Herstellung von gegebenenfalls geschäumten, Isocyanuratgruppen aufweisenden Polyurethankunststoffen, dadurch gekennzeichnet, daß man ein Reaktivsystem bestehend aus

a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) bei 30 bis 150 °C in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,15 Mol an Epoxidgruppen vorliegen,

b) einer NCO-reaktiven Komponente, bestehend aus mindestens einer organischen Verbindung mit mindestens 2 gegenüber Isocyanatgruppen im Sinne einer Additionsreaktion reaktionsfähigen Gruppen, mit der Maßgabe, daß mindestens 10 Gew.-% der Komponente b) aus Verbindungen besteht, die ein über 2000 liegendes, aus der Funktionalität und dem Gehalt an NCO-reaktiven Gruppen berechenbares Molekulargewicht aufweisen, wobei die Menge der Komponente b) so gewählt wird, daß auf jede Isocyanatgruppe der Komponente a) 0,1 bis 0,9 gegenüber Isocyanatgruppen reaktionsfähige Gruppen der Komponente b) entfallen,

c) tertiären Aminen, die in einer solchen Menge vorliegen, daß die Gesamtmischung unter Einbeziehung der gegebenenfalls in der Komponente b) vorliegenden tertiären Aminstickstoffatome pro 100 g mindestens 0,005 Mol tertiären Aminstickstoff enthält

und gegebenenfalls

d) weiteren Hilfs- und Zusatzstoffen

durch Abmischung der Einzelkomponenten herstellt und anschließend, gegebenenfalls unter Formgebung, durch Wärmezufuhr und/oder unter Ausnutzung der Reaktionswärme der sofort ablaufenden Polyurethanbildungsreaktion auf mindestens 60 ° C erwärmt und die Aushärtung unter Trimerisierung eines Teils der im Ausgangsgemisch vorliegenden Isocyanatgruppen zu Ende führt.

Bei der Komponente a) der erfindungsgemäßen Reaktivsysteme handelt es sich um Gemische aus (i) einer Polyisocyanatkomponente und (ii) einer Epoxid-Komponente, wobei letztere durch eine Wärmebehandlung in Gegenwart eines Alkylierungsmittels so stabilisiert ist, daß eine Reaktion zwischen den Isocyanatgruppen und den Epoxidgruppen, beispielsweise im Sinne der US-PS 4 766 158, weitgehend unterbleibt.

Die Polyisocyanatkomponente (i) besteht aus mindestens einem organischen Polyisocyanat der aus der Polyurethanchemie an sich bekannten Art. In Betracht kommen beispielsweise Hexamethylendiisocyanat, die isomeren Xylylendiisocyanate, 4,4′-Diisocyanato-dicyclohexylmethan, 2,4- und/oder 2,6-Diisocyanatotoluol, 4,4′-Diisocyanatodiphenylmethan, dessen Gemische mit 2,4′-Diisocyanatodiphenylmethan und gegebenenfalls geringen Mengen 2,2′-Diisocyanatodiphenylmethan und/oder mit seinen höheren Homologen. Derartige Gemische entstehen bekanntlich bei der an sich bekannten Phosgenierung von Anilin-Formaldehyd-Kondensaten. Ferner in Betracht kommen Urethan- und/oder Carbodiimid- und/oder Uretdion- und/oder Isocyanurat- und/oder Biuret-modifizierte Derivate dieser Polyisocyanate. Vorzugsweise handelt es sich bei der Polyisocyanatkomponente (i) um mindestens ein aromatisches Polyisocyanat. Besonders gut geeignet sind bei Raumtemperatur flüssige Polyisocyanate oder Polyisocyanatgemische der Diphenylmethanreihe oder bei Raumtemperatur flüssige Derivate dieser Polyisocyanate bzw. Polyisocyanatgemische. Die Polyisocyanatkomponente (i) weist im allgemeinen einen NCO-Gehalt von 15 bis 50 Gew.-%, vorzugsweise von 22 bis 32 Gew.-% auf.

Bei der Epoxid-Komponente (ii) handelt es sich um mindestens ein organisches Epoxid, d.h. vorzugsweise um mindestens eine organische Verbindung die pro Molekül 1 bis 4, insbesondere 1 bis 2 Epoxidgruppen bei einem Epoxidäquivalentgewicht von 70 bis 500, vorzugsweise 170 bis 220 aufweist. Geeignet sind Monoepoxide wie beispielsweise Phenoxypropylenoxid, Styroloxid oder Glycidalkohol oder höherfunktionelle Polyepoxide wie beispielsweise Polyglycidylether mehrwertiger Phenole, insbesondere von Bisphenol A; Polyepoxidverbindungen auf der Basis von aromatischen Aminen, insbesondere Bis(N-epoxypropyl)-anilin, N,N′-Dimethyl-N,N′-diepoxypropyl-4,4′-diaminodiphenylmethan und N-Diepoxypropyl-4-aminophenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan.

Die Epoxide (ii) liegen in den erfindungsgemäßen Komponenten a) in bezüglich ihrer Reaktivität gegenüber Isocyanatgruppen inhibierter, d.h. in stabilisierter Form vor, Diese Stabilisierung der Epoxide erfolgt mittels einer Wärmebehandlung bei 30 bis 150 °C, vorzugsweise 80 bis 130 °C in Gegenwart eines Alkylierungsmittels, welches im allgemeinen in einer Menge von 0,005 bis 1 Gew.-%, vorzugsweise 0,05 bis 0,25 Gew.-%, bezogen auf das Gewicht des Epoxids, eingesetzt wird. Die Wärmebehandlung erfolgt im allgemeinen während eines Zeitraums von 15 bis 60 Minuten und kann sowohl in Abwesenheit der Polyisocyanatkomponente (i) als auch in Gegenwart zumindest eines Teils dieser Komponente stattfinden. Dies bedeutet, daß die Zugabe des Alkylierungsmittels und auch die anschließende Wärmebehandlung sowohl vor der Vereinigung des Epoxids mit dem Polyisocyanat als auch nach erfolgter Abmischung des Epoxids mit zumindest einem Teil des Polyisocyanats stattfinden können.

Geeignete Alkylierungsmittel sind beispielsweise Methyliodid, Dimethylsulfat oder vorzugsweise Sulfonsäurealkylester des Molekulargewichtsbereichs 110 bis 250 mit 1 bis 4 Kohlenstoffatomen im Alkylrest. Hierzu gehören sowohl aliphatische Sulfonsäurealkylester wie n-Butansulfonsäuremethylester, n-Perfluorbutansulfonsäuremethylester, n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -n-butylester, 1-Naphthalinsulfonsäuremethylester, 3-Nitrobenzolsulfonsäure-methylester oder 2-Naphthalinsulfonsäuremethylester. Die beispielhaft genannten aromatischen Sulfonsäureester sind bevorzugt. Besonders bevorzugt wird p-Toluolsulfonsäuremethylester verwendet.

Im übrigen liegen in der Komponente a) die Epoxide (ii) in einer solchen Menge vor, daß auf 100 g der Komponente a) 0,005 bis 0,15, vorzugsweise 0,01 bis 0,05 Mol Epoxidgruppen entfallen.

Bei der Komponente b) der erfindungsgemäßen Systeme handelt es sich vorzugsweise um mindestens eine organische Verbindung des Molekulargewichtsbereichs 62 bis 12 000, vorzugsweise 62 bis 6000 mit 2 bis 8, vorzugsweise 2 bis 4 gegenüber Isocyanatgruppen reaktionsfähigen Gruppen, vorzugsweise aromatischen primären Aminogruppen oder Hydroxylgruppen, besonders bevorzugt aliphatischen Hydroxylgruppen, mit der Maßgabe, daß mindestens 10 Gew,-% der Komponente b) aus derartigen Verbindungen mit einem über 2000 liegenden Molekulargewicht bestehen, wobei das Molekulargewicht aus der Funktionalität und dem Gehalt an gegenüber Isocyanatgruppen reaktionsfähigen Gruppen errechenbar ist.

Als Komponente b) oder Teil der Komponente b) eignen sich sowohl niedermolekulare mehrwertige Alkohole (Molekulargewichtsbereich 62 bis 400) wie Ethylenglykol, Diethylenglykol, 1,4-Dihydroxybutan, 1,6-Dihydroxyhexan, Trimethylolpropan, Glycerin, Pentaerythrit, Sorbit oder Saccharose, als auch höhermolekulare Polyhydroxylverbindungen (Molekulargewichtsbereich 400 bis 12 000, vorzugsweise 400 bis 6000) wie beispielsweise Polyhydroxypolyether der aus der Polyurethanchemie an sich bekannten Art wie sie durch Alkoxylierung von geeigneten Startermolekülen wie den beispielhaft genannten mehrwertigen Alkoholen oder auch von Ammoniak oder Aminen wie Ethylendiamin, Hexamethylendiamin, 2,4-Diaminotoluol, Anilin, oder Aminoalkoholen wie Aminoethanol unter Verwendung von Propylenoxid und/oder Ethylenoxid in beliebiger Reihenfolge dieser Alkylenoxide in an sich bekannter Weise zugänglich sind. Ferner geeignet sind Polyesterpolyole, wie sie durch Umsetzung der beispielhaft genannten niedermolekularen Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 260 142, sowie DE-OS 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-PS 3 869 413 bzw. DE-OS 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-Patentschriften 3 383 351, 3 304 273, 3 523 093, 3 110 695; DE-Auslegeschriften 1 152 536) oder Polycarbonatpolyolen (DE-Patentschrift 1 769 795; US-Patentschrift 3 637 909) erhalten werden, sind für das erfindungsgemäße Verfahren als Komponente b) geeignet. Bei Verwendung von Polyetherpolyolen, welche gemäß DE-OS 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten erfindungsgemäß als Verbindungen b) zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Ferner als Komponente b) bzw. als Teil der Komponente b) geeignet sind endständige aromatische primäre Aminogruppen aufweisende Polyetherpolyamine wie sie beispielsweise gemäß den in EP-A-79 536, DE-OS 2 948 419, DE-OS 2 019 432, DE-OS 2 619 840, US-PS 3 808 250, US-PS 3 975 426 oder US-PS 4 016 143 beschriebenen Verfahren zugänglich sind.

Im übrigen kann die Komponente b), den oben gemachten Ausführungen entsprechend, auch niedermolekulare aromatische Diamine als Abmischkomponente enthalten. Bevorzugt sind dabei aromatische Diamine wie 1,4-Diaminobenzol, 2,4-Diaminotoluol, 2,4'- und/oder 4,4'-Diaminodiphenylmethan oder vorzugsweise solche Diamine die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppen zwei Alkylsubstituenten mit jeweils 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Zu diesen bevorzugten bzw. besonders bevorzugten Diaminen gehören 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, dessen technischen Gemische mit 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl-4,4'-diaminodiphenylmethan. Beliebige Gemische derartiger aromatischer Diamine können ebenfalls eingesetzt werden.

Besonders bevorzugt besteht die Komponente b) jedoch ausschließlich aus Polyolen der beispielhaft genannten Art des Molekulargewichtsbereichs 62 bis 6000 und einer Hydroxylfunktionalität von 2 bis 3.

Die Komponente b) liegt in den erfindungsgemäßen Systemen in einer solchen Menge vor, daß auf jede Isocyanatgruppe der Komponente a) 0,1 bis 0,9, vorzugsweise 0,1 bis 0,5 gegenüber Isocyanatgruppen reaktionsfähige Gruppen der Komponente b) entfallen.

Bei der Komponente c) handelt es sich um tertiäre Amine, die vorzugsweise keine gegenüber Isocyanatgruppen reaktionsfähigen Gruppen und ein Molekulargewicht von 101 bis 250 aufweisen. In Betracht kommen insbesondere die an sich bekannten tert. Aminkatalysatoren der Polyurethanchemie wie beispielsweise Triethylamin, Tributylamin, N-Methyl-morpholin, N-Ethylmorpholin, N-Cocomorpholin, N,N,N′,N′-Tetramethylethylendiamin, 1,4-Diazabicyclo-(2,2,2)-octan, N-Methyl-N′-dimethylamino-ethylpiperazin, N,N-Dimethylcyclohexylamin, N,N,N′,N′-Tetramethyl-1,3-butandiamin, 1-cyanoethyl-2-phenylimidazol, 1,2-Dimethylimidazol oder 2-Methyl-imidazol. Zu den bevorzugten tert. Aminen gehören N,N-Dimethylbenzylamin oder die Verbindungen der Formeln

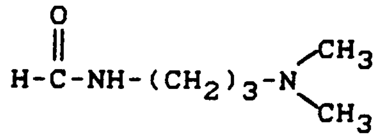

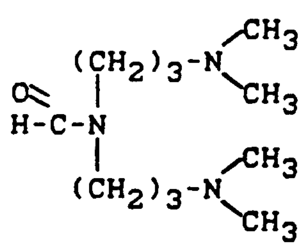

wobei die letztgenannten beiden Verbindungen besonders bevorzugt sind, da sie unter den Bedingungen des erfindungsgemäßen Verfahrens nicht flüchtig und weitgehend geruchlos sind.

Die tert. Amine c) liegen in den erfindungsgemäßen Systemen in einer solchen Menge vor, daß deren Gehalt an tert. Aminstickstoffatomen unter Einbeziehung der gegebenenfalls in der Komponente b) vorliegenden tert. Aminstickstoffatome bei mindestens 0,005 Mol/100 g, vorzugsweise mindestens 0,01 Mol/100 g des gesamten Reaktionsgemischs (Summe der Komponenten a) bis d)) liegt. Vorzugsweise werden jedoch die tert. Amine c) auch bei Vorliegen einer innerhalb der genannten Bereiche liegenden Menge an tert. Aminstickstoffatomen in der Komponente b) zusätzlich mitverwendet und zwar in einer solchen Menge, die einem Gehalt der Systeme (Summe der Komponenten a) bis d)) an tert. Aminstickstoff, herrührend von der Komponente c), von 0,005 bis 0,15 Mol/100 g entspricht.

Zu den gegebenenfalls mitzuverwendenden Hilfs- und Zusatzstoffen d) gehören beispielsweise Treibmittel, oberflächenaktive Substanzen, Schaumstabilisatoren sowie interne Formtrennmittel.

Geeignete Treibmittel sind beispielsweise Wasser, Methylenchlorid, Monofluortrichlormethan, Dichlordifluormethan, Chlordifluormethan oder auch inerte Gase wie beispielsweise Stickstoff, Luft oder Kohlendioxid. Bei Verwendung von derartigen inerten Gasen erfolgt die "Gasbeladung" des Reaktionsgemisches dergestalt, daß man dem Gemisch aus den Komponenten b) bis d) mittels einer Venturidüse oder mittels eines Hohlrührers (gemäß DE-OS 3 244 037) das Gas in einer Menge von im allgemeinen von mindestens 10 Vol.-%, vorzugsweise im allgemeinen von mindestens 20 Vol.-% (bezogen auf Normaldruck) einverleibt.

Als oberflächenaktive Substanzen kommen Verbindungen in Betracht, welche zur Unterstützung der Homogenisierung der Ausgangsstoffe dienen. Genannt seien beispielsweise die Natriumsalze von Fettsäuren sowie Salze von Fettsäuren mit Aminen, z.B. ölsaures Diethylamin oder stearinsaures Diethanolamin.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-PS 2 764 565 beschrieben.

Die Menge der gegebenenfalls mitzuverwendenden Treibmittel, oberflächenaktiven Substanzen und Schaumstabilisatoren liegt im allgemeinen unterhalb 15, vorzugsweise bei maximal 10 Gew.-%, bezogen auf das Gesamtgewicht der Komponenten a) bis d).

Zu den gegebenenfalls mitzuverwendenden Hilfsmittel d) gehören auch die an sich bekannten inneren Formtrennmittel, wie sie beispielsweise in DE-OS 1 953 637 (= US-PS 3 726 952), DE-OS 2 121 670 (= GB-PS 1 365 215), DE-OS 2 431 968 (= US-PS 4 098 731) bzw. in DE-OS 2 404 310 (= US-PS 4 058 492) beschrieben sind. Bevorzugte Trennmittel sind die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Aminen, die mindestens eine primäre, sekundäre oder tertiäre Aminogruppe besitzen, gesättigte und/oder ungesättigte COOH-und/oder OH-Gruppen aufweisende Ester von mono- und/oder polyfunktionellen Carbonsäuren und polyfunktionellen Alkoholen mit Hydroxyl- oder Säurezahlen von mindestens 5, esterartige Umsetzungsprodukte aus Ricinolsäure und langkettigen Fettsäuren, Salze aus Carbonsäuren und tertiären Aminen sowie natürliche und/oder synthetische Öle, Fette oder Wachse.

Besonders bevorzugt sind das Ölsäure- oder Tallölfettsäuresalz des amidgruppenhaltigen Amins, das durch Umsetzung von N-Dimethylaminopropylamin mit Ölsäure oder Tallölfettsäure erhalten worden ist bzw. das Salz aus 2 Mol Ölsäure und 1 Mol 1,4-Diaza-bicyclo-(2,2,2)-octan.

Neben diesen beispielhaft genannten, bevorzugt einzusetzenden Trennmitteln können prinzipiell beim erfindungsgemäßen Verfahren auch andere an sich bekannte Trennmittel des Standes der Technik allein oder im Gemisch mit den bevorzugten, beispielhaft genannen Trennmitteln eingesetzt werden. Zu diesen weiterhin geeigneten Trennmitteln gehören beispielsweise die Umsetzungsprodukte aus Fettsäureestern und Polyisocyanaten gemäß DE-AS 2 307 589, die Umsetzungsprodukte aus reaktionsfähige Wasserstoffatome aufweisenden Polysiloxanen mit Mono-und/oder Polyisocyanaten gemäß DE-OS 2 356 692 (= US-PS 4 033 912), Ester von Hydroxymethylgruppen aufweisenden Polysiloxanen mit Mono- und/oder Polycarbonsäuren gemäß DE-OS 2 363 452 (= US-PS 4 024 090) und Salze aus Aminogruppen enthaltenden Polysiloxanen und Fettsäuren gemäß DE-OS 2 427 273 oder DE-OS 2 431 968 (US-PS 4 098 731).

Die genannten internen Formtrennmittel werden, falls überhaupt, in einer Menge von insgesamt bis zu 10 Gew.-%, vorzugsweise bis zu 6 Gew.-%, bezogen auf das gesamte Reaktionsgemisch, eingesetzt.

Weitere, gegebenenfalls mitzuverwendende Zusatzstoffe d) sind beispielsweise Füllstoffe, Farbstoffe, Pigmente und Flammschutzmittel.

Als Füllstoffe, insbesondere verstärkend wirkende Füllstoffe, seien beispielhaft genannt: silikatische Mineralien, beispielsweise Schichtsilikate wie Antigorit, Serpentin, Hornblenden, Amphibile, Chrisotil, Talkum; Metalloxide wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden natürliche und synthetische faserförmige Materialien wie Asbest, Wollastonit und insbesondere Glasfasern verschiedener Länge, die gegebenenfalls geschlichtet sein können.

Füllstoffe können einzeln oder als Gemisch verwendet werden.

Die Füllstoffe werden, falls überhaupt, der Reaktionsmischung vorteilhafterweise in Mengen von bis zu 50 Gew.-%, vorzugsweise bis zu 30 Gew.-%, bezogen auf das Gewicht der Komponenten a) bis d), zugegeben.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel wie Aluminiumoxidhydrat, Ammoniumpolyphosphat und Calciumsulfat verwendet werden. Im allgemeinen hat es sich als zweckmäßig erwiesen, bis zu 25 Gew.-% der genannten Flammschutzmittel, bezogen auf die Summe der Komponenten a) bis d) zu verwenden.

Nähere Angaben über die üblichen Hilfs- und Zusatzstoffe sind der Fachliteratur, beispielsweise der Monographie von J.H. Saunders und K.C. Frisch "High Polymers" Band XVI, Polyurethanes, Teil 2 und , Verlag Interscience Publishers 1962 bzw. 1964, zu entnehmen.

Zur Herstellung der erfindungsgemäßen Reaktivsysteme werden die Komponenten a) bis d) bei einer unterhalb 60° C, vorzugsweise unter 40° C liegenden Temperatur miteinander vermischt. Hierbei ist es im Falle von langsam reagierenden Gemischen möglich, alle Einzelkomponenten mit Hand zu vermischen und diese Mischung anschließend zu vergießen. Bevorzugt ist jedoch eine Arbeitsweise, bei welcher man die Polyisocyanatkomponente a) mit einem vorab hergestellten Gemisch der Polyolkomponente b) mit der Aminkomponente c) vermischt, wobei die gegebenenfalls mitverwendeten Hilfs- und Zusatzstoffe d) sowohl der Komponente a) als auch dem Gemisch der Komponenten b) und c) zugemischt werden können (falls sie mit dem jeweiligen Komponenten verträglich sind) oder auch separat dem Gemisch zudosiert werden können.

Die erhaltenen, erfindungsgemäßen Reaktivsysteme weisen unterhalb 60° C eine Topfzeit von bis 120 Minuten auf, da die sofort einsetzende Polyurethan-Bildungsreaktion zunächst zu keiner Verfestigung, in vielen Fällen nicht einmal zu einer nennenswerten Viskositätserhöhung sondern lediglich zu einer Temperaturerhöhung führt. Erst nach Überschreiten der Temperatur von ca. 60° C aufgrund der Reaktionswärme und/oder durch Beheizen des Systems erfolgt eine deutliche Beschleunigung der Verfestigungsreaktion aufgrund der einsetzenden Trimerisierung der überschüssigen Isocyanatgruppen. Die erfindungsgemäßen Systeme eignen sich daher insbesondere zur Herstellung von Formkörpern, wobei die vergleichsweise lange Topf-und Gießzeit bei gleichzeitig vergleichsweise kurzer Formstandzeit die besonders hervorzuhebenden Merkmale darstellen.

Die erfindungsgemäßen Reaktivsysteme können nach dem erfindungsgemäßen Verfahren zu massiven oder auch geschäumten Gießkörpern oder Formteilen verarbeitet werden. Isolierstege für Fensterprofile, Rollen, Walzen, Kegelkugeln, Kegel, Filterplatten, Gehäuse, Paletten sind Beispiele für mögliche Anwendungen der resultierenden Materialien, Da problemlos sehr große Wandstärken realisiert werden können, bieten sich diese Materialien auch zur Herstellung dicker Platten an, die in geschäumter Form - im Dichtebereich 400 - 800 kg/m$^3$ - als Modellbauplatten Verwendung finden können.

Beispiele

Im Falle der nachstehenden erfindungsgemäßen Beispiele 1 bis 9 bestand die Komponente I jeweils aus einer erfindungsgemäßen "Polyisocyanatkomponente a)", die jeweils durch Abmischung eines Polyisocyanat/Epoxid-Gemischs (Zubereitung 1 bzw. 2) mit einem weiteren Polyisocyanat (Polyisocyanat A) hergestellt worden ist. Die Komponente II der erfindungsgemäßen Beispiele 1 bis 9 bestand jeweils aus einem Gemisch von erfindungswesentlichen Komponenten b) und c). Die Vermischung der Komponenten I und II erfolgte jeweils durch Rührwerksvermischung.

Die Verfestigungszeit der Reaktionsmischung wurde für Tabelle 1 als Zeit bis zum Beginn der Verfestigung in einem Pappbecher (Durchmesser 9 cm, Höhe: 14 cm, Füllmenge: 250 g) bestimmt, wobei die angegebene Temperatur (RT bezw. 40° C) sich auf die Anfangstemperatur bezieht. Die in Tabelle 2 angegebene Reaktivität bezieht sich auf den Verfestigungszeitpunkt der auf eine temperierte Metallplatte ausgegossenen Reaktionsmischung.

Die in Tabelle 1 dargestellten Beispiele 1 bis 6 zeigen die Wirkung unterschiedlicher Epoxide (1- und 2-funktionell) sowie unterschiedlicher Epoxid-Konzentrationen.

In Tabelle 2 zeigt der Vergleich der Beispiele (7), (8) und (9) den Einfluß einer geringen Menge einer sauren Verunreinigung (Dibutylphosphat). Die nicht erfindungsgemäßen Vergleichsbeispiele 10 und 11 zeigen, daß nur mit außerordentlich niedrigen Konzentrationen von Kaliumacetat als Katalysator annähernd mit dem erfindungsgemäßen Verfahren vergleichbare offene Zeiten erhalten werden (vgl. Beispiele 7, 10, 11 bei 50 bis 70° C). Jedoch ist bei der Kaliumacetat-Katalyse der Temperatureinfluß auf die Reaktivität sehr viel größer, so daß diese nicht erfindungsgemäße Arbeitsweise sehr viel größere Anforderungen an die

Temperaturkonstanz der Reaktionsmischung stellt. Das nicht erfindungsgemäße Vergleichsbeispiel 13 zeigt, daß bei einer Erhöhung der Konzentration des nicht erfindungsgemäßen Katalysators (Kaliumacetat) völlig unzureichende, da viel zu kurze, Topfzeiten resultieren.

Der entscheidende Vorteil des erfindungsgemäßen Verfahrens wird jedoch bei Betrachtung des Vergleichsbeispiels 12 zusammen mit den Beispielen 8 und 9 sichtbar: Selbst äußerst geringe Mengen des als saure Verunreinigung zugegebenen Dibutylphosphorsäureesters verhindern die Verfestigung der mit Kaliumacetat katalysierten Mischung. Die erfindungsgemäße Mischung dagegen verändert ihre Reaktivität nur in einem viel geringeren Ausmaß.

Verwendete Rohstoffe

Zubereitung 1:

1000 g Carbodiimid-modifiziertes 4,4′-Diisocyanatodiphenylmethan, NCO-Gehalt: 30 Gew.-%.
680 g Phenoxypropylenoxid

Die Mischung aus diesen beiden Komponenten wird mit 1 g p-Toluolsulfonsäuremethylester versetzt. Anschließend wird das so erhaltene Gemisch während eines Zeitraums von 30 Min. auf 120 °C erhitzt.
NCO-Gehalt: 17,0 Gew.-%
Viskosität (25 °C): 19 mPa.s

Zubereitung 2:

1000 g des carbodiimidisierten Diisocyanats gemäß Zubereitung 1.
680 g des Diglycidylethers von Bisphenol A.
Die Stabilisierung erfolgt auf die gleiche Weise wie im Fall der Zubereitung 1.
NCO-Gehalt: 17,0 Gew.-%.
Viskosität (25 ° C): 400 mPa.s

Polyisocyanat A:

Semiprepolymer aus 4,4′-Diisocyanatodiphenylmethan und Tripropylenglykol.
NCO-Gehalt: 23 Gew.-%
Viskosität (25 ° C): 700 mPa.s

Polyol 1:

Polyetherpolyol der OH-Zahl 35 hergestellt durch Propoxylierung von Trimethylolpropan und anschließende Ethoxylierung des Propoxylierungsprodukts (PO:EO-Gewichtsverhältnis = 82,5:17,5).

Polyol 2:

Polyetherpolyol der OH-Zahl 150 hergestellt durch Propoxylierung von Propylenglykol und anschließende Ethoxylierung des Propoxylierungsprodukts (PO:EO-Gewichtsverhältnis = 87:13).

**Tabelle 1**

| Beispiele | 1 | 2 | 3 | 4 | 5 | 6 | |
|---|---|---|---|---|---|---|---|
| **Komponente I** | | | | | | | |
| Polyisocyanat A | 115 | 115 | 104 | 115 | 115 | 104 | Gew.-Teile |
| Zubereitung 1 | / | / | / | 20 | 20 | 36 | Gew.-Teile |
| Zubereitung 2 | 20 | 20 | 36 | / | / | / | Gew.-Teile |
| **Komponente II** | | | | | | | |
| Polyol 1 | 100 | 100 | 100 | 100 | 100 | 100 | Gew.-Teile |
| Polyol 2 | 10 | 10 | 10 | 10 | 10 | 10 | Gew.-Teile |
| Dimethylbenzylamin | 2 | 5 | 5 | 2 | 5 | 5 | Gew.-Teile |
| Ausgangstemp.: | | | | | | | |
| RT, Verfestigungszeit | 21 | 10 | 8 | 18 | 10 | 8 | Min. |
| $40^0$ C, Verfestigungszeit: | 9 | 4 | 4 | 8 | 4 | 4 | Min. |

**Tabelle 2**

| Beispiele | | 7 | 8 | 9 | 10x | 11x | 12x | 13x | |
|---|---|---|---|---|---|---|---|---|---|
| **Komponente 1** | | | | | | | | | |
| Polyisocyanat A | | 115 | 115 | 115 | 135 | 135 | 135 | 135 | Gew.-Teile |
| Zubereitung 2 | | 20 | 20 | 20 | - | - | - | - | Gew.-Teile |
| Dibutylphosphat | | - | 0,08 | 0,16 | - | - | 0,08 | - | Gew.-Teile |
| **Komponente 2** | | | | | | | | | |
| Polyol 1 | | 100 | 100 | 100 | 100 | 100 | 100 | 100 | Gew.-Teile |
| Polyol 2 | | 10 | 10 | 10 | 10 | 10 | 10 | 10 | Gew.-Teile |
| Dimethylbenzylamin | | 5 | 5 | 5 | - | - | - | | Gew.-Teile |
| Kaliumacetat | | - | - | - | 0,075 | 0,038 | 0,038 | 0,3 | Gew.-Teile |
| Temperatur der beheizten Platte (°C): | | Aushärtung nach: | | | | | | | |
| | 140 | 50" | 1' | 1'30" | - | - | 12' | - | |
| | 130 | - | 1'15" | 1'50" | - | - | - | - | |
| | 120 | 50" | 1'45" | 2' | - | - | 30' | - | |
| | 110 | - | 2'30" | 2'20" | - | 27" | - | - | |
| | 100 | 1'15" | 3'10" | 3'20" | 15" | 37" | - | 3" | |
| | 90 | 2'10" | 4'30" | 5' | 35" | 50" | - | 8" | |
| | 80 | 3'30" | 7'30" | 7'30" | 50" | 1'10" | - | 12" | |
| | 70 | 4'30" | 10'30" | 12' | 1'20" | 4'50" | - | 22" | |
| | 60 | 10' | 16' | 28' | 7'50" | 11'30" | - | 50" | |
| | 50 | 16' | - | - | 10' | 25' | - | 125" | |

' = min.

" = sec.

x = Vergleichsbeispiele

**Patentansprüche**

**Patentansprüche für folgende Vertragsstaaten : AT, BE, CH, DE, FR, GB, IT, LI, NL, SE**

**1.** Reaktivsysteme bestehend aus

a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) bei 30 bis 150 °C in Gegenwart eines Alkylierungsmittels sichergestellt

worden ist, und wobei die Mengenverhältnisse der Komponenten (i) und (ii) so gewählt werden, daß in 100 g der Komponente a) 0,005 bis 0,15 Mol an Epoxidgruppen vorliegen,

b) einer NCO-reaktiven Komponente, bestehend aus mindestens einer organischen Verbindung mit mindestens 2 gegenüber Isocyanatgruppen im Sinne einer Additionsreaktion reaktionsfähigen Gruppen, mit der Maßgabe, daß mindestens 10 Gew.-% der Komponente b) aus Verbindungen besteht, die ein über 2000 liegendes, aus der Funktionalität und dem Gehalt an NCO-reaktiven Gruppen berechenbares Molekulargewicht aufweisen, wobei die Menge der Komponente b) so gewählt wird, daß auf jede Isocyanatgruppe der Komponente a) 0,1 bis 0,9 gegenüber Isocyanatgruppen reaktionsfähige Gruppen der Komponente b) entfallen,

c) tertiären Aminen, die in einer solchen Menge vorliegen, daß die Gesamtmischung unter Einbeziehung der gegebenenfalls in der Komponente b) vorliegenden tertiären Aminstickstoffatome pro 100 g mindestens 0,005 Mol tertiären Aminstickstoff enthält,

und gegebenenfalls

d) weiteren Hilfs- und Zusatzstoffen.

2. Reaktivsysteme gemäß Anspruch 1, dadurch gekennzeichnet, daß die in der Komponente a) vorliegende Polyisocysnatkomponente (i) ein bei Raumtemperatur flüssiges Polyisocyanat oder Polyisocyanatgemisch der Diphenylmethanreihe oder ein bei Raumtemperatur flüssiges Derivat eines derartigen Polyisocyanats bzw. Polyisocyanatgemischs darstellt.

3. Reaktivsysteme gemäß Anspruch 1 und 2, dadurch gekennzeichnet, daß die Komponente b) aus mindestens einer organischen Polyhydroxylverbindung mit einer Hydroxylfunktionalität von 2 bis 4 besteht, mit der Maßgabe, daß mindestens 10 Gew.-% der Komponente b) aus Verbindungen besteht, die ein über 2000 liegendes, aus der Funktionalität und dem Gehalt an NCO-reaktiven Gruppen berechenbares Molekulargewicht aufweisen.

4. Verfahren zur Herstellung von gegebenenfalls geschäumten, Isocyanuratgruppen aufweisenden Polyurethankunststoffen, dadurch gekennzeichnet, daß man ein Reaktivsystem bestehend aus

a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) bei 30 bis 150 °C in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,15 Mol an Epoxidgruppen vorliegen,

b) einer NCO-reaktiven Komponente, bestehend aus mindestens einer organischen Verbindung mit mindestens 2 gegenüber Isocyanatgruppen im Sinne einer Additionsreaktion reaktionsfähigen Gruppen, mit der Maßgabe, daß mindestens 10 Gew.-% der Komponente b) aus Verbindungen besteht, die ein über 2000 liegendes, aus der Funktionalität und dem Gehalt an NCO-reaktiven Gruppen berechenbares Molekulargewicht aufweisen, wobei die Menge der Komponente b) so gewählt wird, daß auf jede Isocyanatgruppe der Komponente a) 0,1 bis 0,9 gegenüber Isocyanatgruppen reaktionsfähige Gruppen der Komponente b) entfallen,

c) tertiären Aminen, die in einer solchen Menge vorliegen, daß die Gesamtmischung unter Einbeziehung der gegebenenfalls in der Komponente b) vorliegenden tertiären Aminstickstoffatome pro 100 g mindestens 0,005 Mol tertiären Aminstickstoff enthält

und gegebenenfalls

d) weiteren Hilfs- und Zusatzstoffen

durch Abmischung der Einzelkomponenten herstellt und anschließend, gegebenenfalls unter Formgebung, durch Wärmezufuhr und/oder unter Ausnutzung der Reaktionswärme der sofort ablaufenden Polyurethanbildungsreaktion auf mindestens 60 ° C erwärmt und die Aushärtung unter Trimerisierung eines Teils der im Ausgangsgemisch vorliegenden Isocyanatgruppen zu Ende führt.

**Patentansprüche für folgenden Vertragsstaat : ES**

1. Verfahren zur Herstellung von Reaktivsystemen, dadurch gekennzeichnet, daß

a) eine lagerstabile Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von

mindestens einem Teil der Polyisocyanatkomponente (i) durchgeführte, Wärmebehandlung der Epoxidkomponente (ii) bei 30 bis 150 °C in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,15 Mol an Epoxidgruppen vorliegen,

b) eine NCO-reaktive Komponente, bestehend aus mindestens einer organischen Verbindung mit mindestens 2 gegenüber Isocyanatgruppen im Singe einer Additionsreaktion reaktionsfähigen Gruppen, mit der Maßgabe, daß mindestens 10 Gew.-% der Komponente b) aus Verbindungen besteht, die ein über 2000 liegendes, aus der Funktionalität und dem Gehalt an NCO-reaktiven Gruppen berechenbares Molekulargewicht aufweisen, wobei die Menge der Komponente b) so gewählt wird, daß auf jede Isocyanatgruppe der Komponente a) 0,1 bis 0,9 gegenüber Isocyanatgruppen reaktionsfähige Gruppen der Komponente b) entfallen,

c) tertiäre Amine , die in einer solchen Menge vorliegen, daß die Gesamtmischung unter Einbeziehung der gegebenenfalls in der Komponente b) vorliegenden tertiären Aminstickstoffatome pro 100 g mindestens 0,005 Mol tertiären Aminstickstoff enthält,

und gegebenenfalls

d) weitere Hilfs- und Zusatzstoffe miteinander gemischt werden.

**2.** Verfahren gemäß Anspruch 1, dadurch gekennzeichnet, daß die in der Komponente a) vorliegende Polyisocyanatkomponente (i) ein bei Raumtemperatur flüssiges Polyisocyanat oder Polyisocyanatgemisch der Diphenylmethanreihe oder ein bei Raumtemperatur flüssiges Derivat eines derartigen Polyisocyanats bzw. Polyisocyanatgemischs darstellt.

**3.** Verfahren gemaß Anspruch 1 und 2, dadurch gekennzeichnet, daß die Komponente b) aus mindestens einer organischen Polyhydroxylverbindung mit einer Hydroxylfunktionalität von 2 bis 4 besteht, mit der Maßgabe, daß mindestens 10 Gew.-% der Komponente b) aus Verbindungen besteht, die ein über 2000 liegendes, aus der Funktionalität und dem Gehalt an NCO-reaktiven Gruppen berechenbares Molekulargewicht aufweisen.

**4.** Verfahren zur Herstellung von gegebenenfalls geschäumten, Isocyanuratgruppen aufweisenden Polyurethankunststoffen, dadurch gekennzeichnet, daß man ein Reaktivsystem bestehend aus

a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyicocyanatkomponente (i) durchgeführte, Wärmebehandlung der Epoxidkomponente (ii)bei 30 bis 150 °C in Gengenwart eines Alkylierungsmittels sichergestellt worden ist, und wobei die Mengenverhältnisse der Komponenten (i) und (ii) so gewählt werden, daß in 100 g der Komponente a) 0,005 bis 0,15 Mol an Epoxidgruppen vorliegen,

b) einer NCO-reaktiven Komponente, bestehend aus mindestens einer organischen Verbindung mit mindestens 2 gegenüber Isocyanatgruppen im Sinne einer Additionsreaktion reaktionsfähigen Gruppen, mit der Maßgabe, daß mindestens 10 Gew.-% der Komponente b) aus Verbindungen besteht, die ein über 2000 liegendes, aus der Funktionalität und den Gehalt an NCO-reaktiven Gruppen berechenbares Molekulargewicht aufweisen, wobei die Menge der Komponente b) so gewählt wird, daß auf jede Isocyanatgruppe der Komponente a) 0,1 bis 0,9 gegenüber Isocyanatgruppen reaktionsfähige Gruppen der Komponente b) entfallen,

c) tertiären Aminen, die in einer solchen Menge vorliegen, daß die Gesamtmischung unter Einbeziehung der gegebenenfalls in der Komponente b) vorliegenden tertiären Aminstickstoffatome pro 100 g mindestens 0,005 Mol tertiären Aminstickstoff enthält,

und gegebenenfalls

d) weiteren Hilfs- und Zusatzstoffen

durch Abmischung der Einzelkomponenten herstellt und anschließend, gegebenenfalls unter Formgebung, durch Wärmezufuhr und/oder unter Ausnutzung der Reaktionswärme der sofort ablaufenden Polyurethanbildungsreaktion auf mindestens 60 °C erwärmt und die Aushärtung unter Trimerisierung eines Teils der im Ausgangsgemisch vorliegenden Isocyanatgruppen zu Ende führt.

## Claims

**Claims for the following Contracting States: AT, BE, CH, DE, FR, GB, IT, LI, NL, SE**

1. Reactive systems consisting of
   a) a storable mixture of (i) a polyisocyanate component consisting of at least one organic polyisocyanate and (ii) an epoxide component consisting of at least one organic epoxide, storability being ensured by heat treatment of the epoxide component (ii) at 30 to 150 °C in the presence of an alkylating agent, the heat treatment optionally being carried out in the presence of at least part of the polyisocyanate component (i), and the quantitative ratios between components (i) and (ii) being selected so that 0.005 to 0.15 mol epoxide groups are present in 100 g of component a),
   b) an NCO-reactive component consisting of at least one organic compound containing at least two groups reactive to isocyanate groups in an addition reaction, with the proviso that at least 10% by weight of component b) consists of compounds which have a molecular weight - calculable from the functionality and the content of NCO-reactive groups - of more than 2000, the quantity of component b) being selected so that there are 0.1 to 0.9 isocyanate-reactive groups of component b) for every isocyanate group of component a),
   c) tertiary amines which are present in such a quantity that the total mixture contains 0.005 mol tertiary amine nitrogen, including the tertiary amine nitrogen atoms optionally present in component b), per 100 g

   and, optionally,
   d) other auxiliaries and additives.

2. Reactive systems as claimed in claim 1, characterized in that the polyisocyanate component (i) present in component a) is a polyisocyanate or polyisocyanate mixture of the diphenyl methane series liquid at room temperature or a derivative - liquid at room temperature - of such a polyisocyanate or polyisocyanate mixture.

3. Reactive systems as claimed in claims 1 and 2, characterized in that component b) consists of at least one organic polyhydroxyl compound having a hydroxyl functionality of 2 to 4, with the proviso that at least 10% by weight of component b) consists of compounds which have a molecular weight - calculable from the functionality and the content of NCO-reactive groups - of more than 2000.

4. A process for the production of optionally foamed polyurethane plastics containing isocyanurate groups, characterized in that
   a) a storable mixture of (i) a polyisocyanate component consisting of at least one organic polyisocyanate and (ii) an epoxide component consisting of at least one organic epoxide, storability being ensured by heat treatment of the epoxide component (ii) at 30 to 150 °C in the presence of an alkylating agent, the heat treatment optionally being carried out in the presence of at least part of the polyisocyanate component (i), and the quantitative ratios between components (i) and (ii) being selected so that 0.005 to 0.15 mol epoxide groups are present in 100 g of component a),
   b) an NCO-reactive component consisting of at least one organic compound containing at least two groups reactive to isocyanate groups in an addition reaction, with the proviso that at least 10% by weight of component b) consists of compounds which have a molecular weight - calculable from the functionality and the content of NCO-reactive groups - of more than 2000, the quantity of component b) being selected so that there are 0.1 to 0.9 isocyanate-reactive groups of component b) for every isocyanate group of component a),
   c) tertiary amines which are present in such a quantity that the total mixture contains 0.005 mol tertiary amine nitrogen, including the tertiary amine nitrogen atoms optionally present in component b), per 100 g

   and, optionally,
   d) other auxiliaries and additives,

   is prepared by mixing of the individual components and is then heated to at least 60 °C, optionally in molds, by application of heat and/or by utilizing the heat of the polyurethane-forming reaction, which takes place immediately, and hardening is completed with partial trimerization of the isocyanate groups present in the starting mixture.

**Claims for the following Contracting State: ES**

1. A process for the production of reactive systems, characterized in that
   a) a storable mixture of (i) a polyisocyanate component consisting of at least one organic polyisocyanate and (ii) an epoxide component consisting of at least one organic epoxide, storability being ensured by heat treatment of the epoxide component (ii) at 30 to 150 ° C in the presence of an alkylating agent, the heat treatment optionally being carried out in the presence of at least part of the polyisocyanate component (i), and the quantitative ratios between components (i) and (ii) being selected so that 0.005 to 0.15 mol epoxide groups are present in 100 g of component a),
   b) an NCO-reactive component consisting of at least one organic compound containing at least two groups reactive to isocyanate groups in an addition reaction, with the proviso that at least 10% by weight of component b) consists of compounds which have a molecular weight - calculable from the functionality and the content of NCO-reactive groups - of more than 2000, the quantity of component b) being selected so that there are 0.1 to 0.9 isocyanate-reactive groups of component b) for every isocyanate group of component a),
   c) tertiary amines which are present in such a quantity that the total mixture contains 0.005 mol tertiary amine nitrogen, including the tertiary amine nitrogen atoms optionally present in component b), per 100 g

   and, optionally,
   d) other auxiliaries and additives

   are mixed together.

2. A process as claimed in claim 1, characterized in that the polyisocyanate component (i) present in component a) is a polyisocyanate or polyisocyanate mixture of the diphenyl methane series liquid at room temperature or a derivative - liquid at room temperature - of such a polyisocyanate or polyisocyanate mixture.

3. A process as claimed in claims 1 and 2, characterized in that component b) consists of at least one organic polyhydroxyl compound having a hydroxyl functionality of 2 to 4, with the proviso that at least 10% by weight of component b) consists of compounds which have a molecular weight - calculable from the functionality and the content of NCO-reactive groups - of more than 2000.

4. A process for the production of optionally foamed polyurethane plastics containing isocyanurate groups, characterized in that
   a) a storable mixture of (i) a polyisocyanate component consisting of at least one organic polyisocyanate and (ii) an epoxide component consisting of at least one organic epoxide, storability being ensured by heat treatment of the epoxide component (ii) at 30 to 150 ° C in the presence of an alkylating agent, the heat treatment optionally being carried out in the presence of at least part of the polyisocyanate component (i), and the quantitative ratios between components (i) and (ii) being selected so that 0.005 to 0.15 mol epoxide groups are present in 100 g of component a),
   b) an NCO-reactive component consisting of at least one organic compound containing at least two groups reactive to isocyanate groups in an addition reaction, with the proviso that at least 10% by weight of component b) consists of compounds which have a molecular weight - calculable from the functionality and the content of NCO-reactive groups - of more than 2000, the quantity of component b) being selected so that there are 0.1 to 0.9 isocyanate-reactive groups of component b) for every isocyanate group of component a),
   c) tertiary amines which are present in such a quantity that the total mixture contains 0.005 mol tertiary amine nitrogen, including the tertiary amine nitrogen atoms optionally present in component b), per 100 g

   and, optionally,
   d) other auxiliaries and additives,

   is prepared by mixing of the individual components and is then heated to at least 60 ° C, optionally in molds, by application of heat and/or by utilizing the heat of the polyurethane-forming reaction, which takes place immediately, and hardening is completed with partial trimerization of the isocyanate groups present in the starting mixture.

## Revendications

## Revendications pour les Etats contractants suivants: AT, BE, CH, DE, FR, GB, IT, LI, NL, SE

**1.** Systèmes réactifs consistant en

a) un mélange stable à la conservation de (i) un composant polyisocyanate consistant en au moins un polyisocyanate organique et (ii) un composant époxyde consistant en au moins un époxyde organique, la stabilité à la conservation ayant été assurée par un traitement thermique, éventuellement effectué en présence d'une partie au moins du composant polyisocyanate (i), du composant époxyde (ii) à une température de 30 à 150 °C, en présence d'un agent alkylant, les proportions relatives entre les composants (i) et (ii) étant choisies en sorte que, dans 100 g du composant a), il y ait 0,005 à 0,15 mol de groupes époxyde,

b) un composant réactif avec les groupes NCO, consistant en au moins un composé organique à au moins deux groupes réactifs avec les groupes isocyanate dans le sens d'une réaction d'addition, sous réserve qu'au moins 10 % du poids du composant b) consistent en composés ayant un poids moléculaire, calculé à partir de la fonctionnalité et de la teneur en groupes réactifs avec les groupes NCO, supérieur à 2 000, la quantité du composant b) étant choisie de manière que, pour chaque groupe isocyanate du composant a), on dispose de 0,1 à 0,9 groupes réactifs avec les groupes isocyanate du le composant b),

c) des amines tertiaires en quantités telles que le mélange total, tenu compte des atomes d'azote aminés tertiaires éventuellement présents dans le composant b), contienne au moins 0,005 mol d'azote aminé tertiaire pour 100 g,

et le cas échéant

d) d'autres produits auxiliaires et additifs.

**2.** Systèmes réactifs selon la revendication 1, caractérisés en ce que le composant polyisocyanate (i) présent dans le composant a) est un polyisocyanate ou mélange de polyisocyanates de la série du diphénylméthane liquide à température ambiante, ou un dérivé d'un tel polyisocyanate ou mélange de polyisocyanates liquide à température ambiante.

**3.** Systèmes réactifs selon les revendications 1 et 2, caractérisés en ce que le composant b) consiste en au moins un composé organique polyhydroxylé à une fonctionnalité en groupes hydroxy de 2 à 4, sous réserve qu'au moins 10 % du poids du composant b) consistent en composés ayant un poids moléculaire, calculé à partir de la fonctionnalité et de la teneur en groupes réactifs avec les groupes NCO, supérieur à 2 000.

**4.** Procédé de préparation de résines synthétiques de polyuréthannes contenant des groupes isocyanurate, éventuellement gonflées en mousse, caractérisé en ce que l'on prépare, par mélange des composants individuels, un système réactif consistant en

a) un mélange stable à la conservation de (i) un composant polyisocyanate consistant en au moins un polyisocyanate organique et (ii) un composant époxyde consistant en au moins un époxyde organique, la stabilité à la conservation ayant été assurée par un traitement thermique effectué le cas échéant en présence d'une partie au moins du composant polyisocyanate (i), du composant époxyde (ii) à une température de 30 à 150 °C en présence d'un agent alkylant, les proportions relatives des composants (i) et (ii) étant choisies en sorte que, dans 100 g du composant a), il y ait 0,005 à 0,15 mol de groupes époxyde,

b) un composant réactif avec les groupes NCO, consistant en au moins un composé organique à au moins deux groupes réactifs avec les groupes isocyanate dans le sens d'une réaction d'addition, sous réserve qu'au moins 10 % du poids du composant b) consistent en composés ayant un poids moléculaire, calculé à partir de la fonctionnalité et de la teneur en groupes réactifs avec les groupes NCO, supérieur à 2 000, la quantité du composant b) étant choisie de manière que, pour chaque groupe isocyanate du composant a), on dispose de 0,1 à 0,9 groupes réactifs avec les groupes isocyanate du composant b),

c) des amines tertiaires présentes en quantités telles que le mélange total, tenu compte des atomes d'azote aminés tertiaires éventuellement présents dans le composant b), contienne au moins 0,005 mol d'azote aminé tertiaire pour 100 g,

et le cas échéant

d) d'autres produits auxiliaires et additifs,

puis, le cas échéant avec façonnage, on chauffe à au moins 60 °C par apport de chaleur et/ou par

exploitation de la chaleur de la réaction de formation du polyuréthanne qui se déclenche immédiatement, et on achève le durcissement complet par trimérisation d'une partie des groupes isocyanate présents dans le mélange initial.

**Revendications pour l'Etat contractant suivant : ES**

1. Procédé de préparation de systèmes réactifs, caractérisé en ce que l'on mélange entre eux
   a) un mélange stable à la conservation de (i) un composant polyisocyanate consistant en au moins un polyisocyanate organique et (ii) un composant époxyde consistant en au moins un époxyde organique, la stabilité à la conservation ayant été assurée par un traitement à la chaleur, éventuellement effectué en présence d'une partie au moins du composant polyisocyanate (i), du composant époxyde (ii) à une température de 30 à 150 °C en présence d'un agent alkylant, les proportions relatives entre les composants (i) et (ii) ayant été choisies en sorte que, pour 100 g du composant a), il y ait 0,005 à 0,15 mol de groupes époxyde,
   b) un composant réactif avec les groupes NCO, consistant en au moins un composé organique à au moins deux groupes réactifs avec les groupes isocyanate dans le sens d'une réaction d'addition, sous réserve qu'au moins 10 % du poids du composant b) consistent en composés ayant un poids moléculaire, calculé à partir de la fonctionnalité et de la teneur en groupes réactifs avec les groupes NCO, supérieur à 2 000, la quantité du composant b) étant choisie en sorte que, pour chaque groupe isocyanate du composant a), on dispose de 0,1 à 0,9 groupes réactifs avec les groupes isocyanate du composant b),
   c) des amines tertiaires en quantités telles que le mélange total, tenu compte des atomes d'azote aminés tertiaires éventuellement présents dans le composant b), contienne au moins 0,005 mol d'azote aminé tertiaire pour 100 g,

   et le cas échéant
   d) d'autres produits auxiliaires et additifs.

2. Procédé selon la revendication 1, caractérisé en ce que le composant polyisocyanate (i) présent dans le composant a) est un polyisocyanate ou mélange de polyisocyanates de la série du diphénylméthane liquide à température ambiante ou un dérivé d'un tel polyisocyanate ou mélange de polyisocyanates, liquide à température ambiante.

3. Procédé selon les revendications 1 et 2, caractérisé en ce que le composant b) consiste en au moins un composé organique polyhydroxylé à une fonctionnalité en groupes hydroxy de 2 à 4, sous réserve qu'au moins 10 % du poids du composant b) consistent en composés ayant un poids moléculaire, calculé à partir de la fonctionnalité et de la teneur en groupes réactifs avec les groupes NCO, supérieur à 2 000.

4. Procédé de préparation de résines synthétiques de polyuréthannes contenant des groupes isocyanurate et éventuellement gonflées en mousse, caractérisé en ce que l'on prépare, par mélange des composants individuels, un système réactif consistant en
   a) un mélange stable à la conservation de (i) un composant polyisocyanate consistant en au moins un polyisocyanate organique et (ii) un composant époxyde consistant en au moins un époxyde organique, la stabilité à la conservation ayant été assurée par un traitement thermique, éventuellement effectué en présence d'une partie au moins du composant polyisocyanate (i), du composant époxyde (ii) à une température de 30 à 150 °C en présence d'un agent alkylant, les proportions relatives entre les composants (i) et (ii) ayant été choisies en sorte que, dans 100 g du composant a), il y ait 0,005 à 0,15 moi de groupes époxyde,
   b) un composant réactif avec les groupes NCO, consistant en au moins un composé organique à au moins deux groupes réactifs avec les groupes isocyanate dans le sens d'une réaction d'addition, sous réserve qu'au moins 10 % du poids du composant b) consistent en composés ayant un poids moléculaire, calculé à partir de la fonctionnalité et de la teneur en groupes réactifs avec les groupes NCO, supérieur à 2 000, la quantité du composant b) étant choisie en sorte que, pour chaque groupe isocyanate du composant a), il y ait 0,1 à 0,9 groupes réactifs avec les groupes isocyanate du composant b),
   c) des amines tertiaires en quantités telles que le mélange total, tenu compte des atomes d'azote aminés tertiaires éventuellement présents dans le composant b), contienne au moins 0,005 mol d'azote aminé tertiaire pour 100 g,

et le cas échéant

d) d'autres produits auxiliaires et additifs,

puis, éventuellement avec façonnage, on chauffe à au moins 60 °C par apport de chaleur et/ou par exploitation de la chaleur de la réaction de formation du polyuréthanne qui se déclenche immédiatement, et on achève le durcissement total par trimérisation d'une partie des groupes isocyanate présents dans le mélange initial.